# EUROPEAN PATENT SPECIFICATION

(11) **EP 1 567 370 B1**
(45) Date of publication and mention of the grant of the patent: **04.10.2006**
(21) Application number: 04768746.2
(22) Date of filing: 04.10.2004
(51) Int. Cl.: B60G 17/015, B60G 17/052, F16F 9/05

(54) **AIR SUSPENSION UNIT AND SYSTEM**
LUFTFEDERUNGSEINHEIT UND -SYSTEM
UNITE DE SUSPENSION PNEUMATIQUE ET SYSTEME

(30) Priority: 03.10.2003 GB 0323160
(43) Date of publication of application: 31.08.2005
(73) Proprietor: Trelleborg Automotive UK Ltd., Ashchurch Tewkesbury GL20 8JS (GB)
(72) Inventor: HARRISON, Andrew Colin, Conventry, West Midlands CV7 8EQ (GB)
(74) Representative: Milanov, Nina Vendela Maria
(86) International application number: PCT/GB2004/004206
(87) International publication number: WO 2005/032863

(56) References cited:
- EP-A- 0 828 087
- US-A- 4 386 791
- US-A- 5 859 692
- PATENT ABSTRACTS OF JAPAN vol. 1996, no. 09, 30 September 1996 (1996-09-30) & JP 08 121521 A (BRIDGESTONE CORP), 14 May 1996 (1996-05-14)

## Description

The present invention relates to a vehicle air suspension system and to an electronically controllable air suspension unit of the type disclosed in EP-A-828,087 on which the preamble to claim 1 is based.

In a vehicle air suspension system either rubber air springs or pneumatic dampers, or both, replace a conventional steel spring and damper arrangement. Air suspension systems offer the advantages of improved ride quality and, if electronically controlled, a facility for adjustment of the vehicle ride height (more specifically the distance between the chassis and the axle) under varying load and dynamic conditions. Height control is achieved by variation of the volume of air within the springs/dampers. As the volume increases or decreases, so too does the height of the vehicle body above the ground, assuming no change in payload.

Systems are known that offer 'load levelling', whereby a specific height is maintained as payload varies, or may in addition offer variable ride heights - e.g. increased ground clearance for driving over uneven terrain.

As air suspension systems maintain a given ride height, the bump and rebound stroke of each spring stays generally constant (as described in more detail hereinafter). This is advantageous in terms of quality of ride, however the vehicle is susceptible to a greater degree of pitch and roll especially when braking, accelerating or cornering.

It is known to provide electronic control of air suspension systems. A controller (ECU) can be used to control adjustment of the volume of air in the air springs, or the damping characteristics of the dampers. These systems suffer from the degree of complexity, especially in terms of the number of components and the electrical circuitry and sensors required. It is also necessary to integrate all of the suspension components (air source, valves, air springs and dampers associated with each suspension point - i.e. each wheel or axle), into a system controlled by the ECU.

Further examples of prior art air suspension units and systems are disclosed in US-A-4,386,791; US-A-5,859,692 and JP-A-08121521.

It is an aim of the present invention to provide an improved air suspension system which substantially alleviates the aforementioned problems.

According to a first aspect of the present invention there is provided an air suspension unit consisting of an integrated assembly mountable to an axle of a vehicle, the air suspension unit comprising:
an air spring;
a height sensor for providing a ride height signal; characterised in that the assembly further comprises a valve; and
an electronic controller;
the electronic controller is operable for controlling the valve to adjust a volume of air in the air spring in response to the ride height signal from the height sensor.

Preferably the air spring comprises a rubber envelope providing a sealed air volume, and the height sensor is mounted within the sealed air volume. More preferably, the height sensor is a linear transducer. It is an advantage that the rubber envelope of the air spring provides an environmental seal for the height sensor, protecting it from dirt or grit. This means that a more sensitive, or less robust height sensor can be employed.

In a preferred embodiment, the air suspension unit further comprises a fluid damper. The rubber envelope of the air spring may surround at least part of the fluid damper.

Preferably, the air suspension unit further comprises means for changing a path for fluid flow within the damper, thereby facilitating variation in a damping coefficient of the fluid damper. The means for changing the fluid flow path may be controllable by the controller.

It is an advantage that the characteristics of the air suspension unit, i.e, the volume of air in the air spring (which effectively determines a spring coefficient) and the damping coefficient are controlled by way of the controller, which is integrated into the air suspension unit.

According to a second aspect of the present invention there is provided a vehicle air suspension system comprising a plurality of suspension elements, characterised in that each element includes:
at least one air suspension unit of the type described above; and
at least one fluid damper.

Each air suspension unit may comprise a fluid damper forming part of the integrated unit.

In a preferred embodiment, each suspension element is associated with one wheel of the vehicle. For a four-wheel vehicle, each suspension element may be one associated with each of all four wheels of the vehicle or each of the two rear wheels only. Each element may comprise a single air suspension unit.

It is an advantage that each air suspension unit is a fully integrated stand-alone unit having its own controller. Thus, each unit may be of an identical construction and therefore may be associated with any one of the wheels (or sets of wheels on large, multi-axle vehicles). This also reduces the overall system complexity (when compared with centrally controlled air suspension systems), is of convenience for replacement and maintenance and reduces the amount of electrical circuitry required. Manufacturing complexity of the suspension units and vehicle assembly times are also reduced because the configuration of each suspension unit is the same.

Preferably, the electronic controller of each air suspension unit is responsive to further signals indicative of prevailing conditions of the vehicle. The further signals may be signals from other air suspension units on the vehicle, for example ride height signals from the other height sensors. The further signals may also include signals indicative of any or all of: vehicle speed; foot brake position; lateral acceleration; engine (running/not running); gear selector position; pressure of air in the air springs. The electronic controller may also receive input signals from push buttons or switches within the vehicle cabin.

It is an advantage of the system that independent control of the characteristics of each suspension element enables the system to compensate for variations in the driving conditions as well as allowing for variations in ride height.

The electronic controller may include a programmable microcontroller to enable 'tuning' in accordance with the required height settings and control strategy for the vehicle.

It is a further advantage that the air suspension unit can be adapted for use on different vehicles by reprogramming of the programmable controller.

Embodiments of the invention will now be described by way of example with reference to the following drawings, in which:
Figure 1 shows a configuration of an air suspension unit in accordance with one aspect of the invention;
Figure 2 shows an arrangement of air suspension units associated with the wheels of a four-wheeled vehicle, in a suspension system according to another aspect of the invention;
Figure 3 is a block diagram representation of signal inputs and outputs to/from an ECU of the suspension unit of Figure 1;
Figure 4 is a graphical representation of damper settings for the suspension unit of Figure 1;
Figure 5 is an illustration of a vehicle and body movements thereof;
Figure 6 is a diagram showing displacements of a vehicle chassis relative to its axles; and
Figure 7 is a graph showing a displacement response in a "bounce" condition.
Figure 8 shows a configuration of another embodiment of an air suspension unit in accordance with one aspect of the invention.

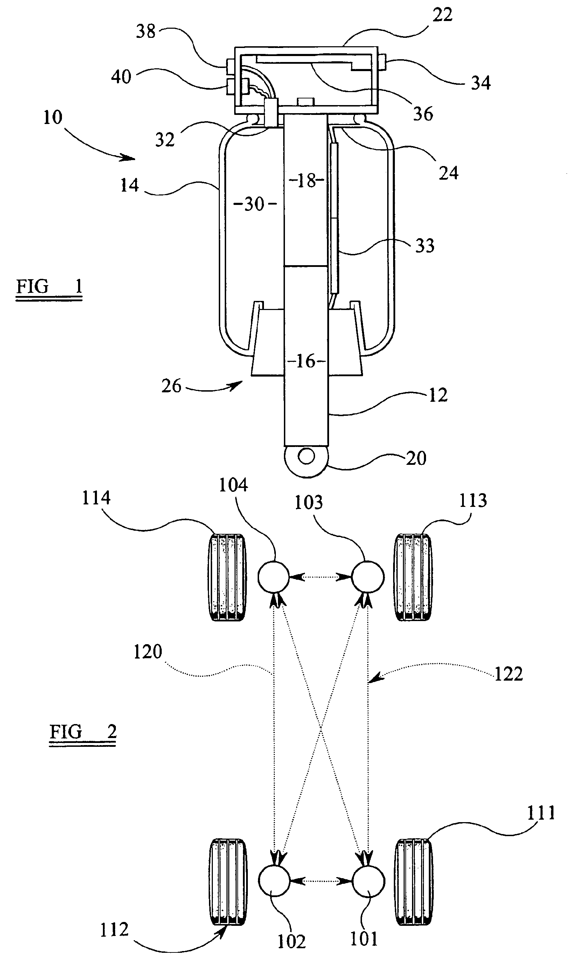

Referring to Figure 1, an air suspension unit 10 comprises a fully-integrated assembly for mounting between the underside of a vehicle chassis and a wheel axle. The unit 10 has a fluid damper 12 extending through a rubber pneumatic air spring 14 that envelops at least a portion of the damper 12.

The fluid damper 12 is of a known telescopic tubular variety having a lower tubular section 16 extending downwardly and coaxially from an upper tubular section 18. The damper 12 has a lower mounting 20 at a lower end of the first tubular section 16, while the second tubular section 18 is fixedly mounted to a top housing 22. A damping fluid is trapped between the tubular sections. Under axial movement between the tubular sections 16, 18, so as to extend or compress the damper, one section slides telescopically within the other and causes the fluid to be forced through a restricted flow path (not shown) within the damper 12. The restricted flow path has a variable restriction, to allow the damping coefficient to be adjusted. An electrically actuated mechanism is provided to effect this adjustment.

The air spring 14 is fixedly mounted at a top end to an underside of a plate 24 forming part of the housing 22, and at a lower end to a mounting 26. The mounting 26 is rigidly attached to, and forms an airtight seal around the first tubular section 16 of the damper 12. The air spring 14, together with the mounting 26 and the plate 24 define an annular cavity 30 around the damper 12, to which compressed air is supplied by way of an electrically actuated valve 32 in the top housing 22. Operation of the valve 32 controls the supply of air to and exhaustion of air out of the air spring 14. When compressed air is supplied to the air spring 14, this causes the air spring 14 to be inflated, and the damper 12 to extend. Similarly the damper 12 will compress when the air spring is deflated. However, this does not affect the damper characteristics, which depend only on the internal orifice size and oil flow path.

A height sensor 33 is provided for sensing and signalling of a ride height. This provides a signal indicative of displacement between the axle and the chassis. The height sensor 33 is mounted inside the air spring 14 and senses displacement between the top of the mounting 26 (or a point on the first tubular portion 16 of the damper 12), and the underside of the plate 24 (or a point on the second tubular portion 18 of the damper 12). The height sensor 33 may be of any type suitable for providing a signal indicative of displacement. One example is a linear variable differential transducer (LVDT), which produces a voltage output indicative of displacement of a ferrous core member relative to an induction coil. The height sensor 33 shown in Figure 1 is enclosed inside the air spring 14. This provides an air-tight seal around the sensor and provides environmental protection (e.g. from contamination or corrosion).

An electronic control unit (ECU) 36 is also housed within the top housing 22. Various signal inputs, including the ride height signal are provided to the ECU 36, which in response sends appropriate output signals to control the air suspension unit 10. The ECU 36 controls the electrical actuation of the 'damping coefficient' adjustment of the damper 12, and the air volume in the air spring 14 by actuation of the valve 32. The ECU may also control operation of an air compressor and reservoir for supply of compressed air to the air spring 14. Electrical power and communications signals are supplied to the ECU 36 by way of a connector 34. The only other connections to the unit 10 are made to an air supply by way of a pneumatic connector 38, and to an electrical power source by way of a power connector 40 to provide power for activating the pneumatic valve 32.

The ECU 36 may include a programmable microcontroller to allow adjustment of the damping coefficient and the control of the valve 32 to be tuned in accordance with the required height settings and control strategy for the vehicle. The tuning allows optimisation of the behaviour of the air suspension unit 10 for a particular vehicle's requirements.

In use, the suspension unit 10 is mounted between an axle and the chassis of the vehicle. The unit 10 may be one associated with each axle of the vehicle or with the rear axle only. Each damper 12 is controlled independently of the associated air spring 14, and each suspension unit 10 is controlled independently from each other suspension unit on the vehicle. This independent control allows for improved handling and performance, as will be evident from the discussion below.

The ECU 36 receives input signals directly from the height sensor 33 within the same unit 10. The ECU 36 also receives signals from the ECUs of other suspension units on the vehicle, and from various other sensors and control units on the vehicle. Examples of other signals that may be received include the status of: the vehicle speed; the foot brake position or braking force; lateral acceleration from an accelerometer; the engine (e.g. running or not running); the gear selector position (e.g. in the case of a vehicle with automatic transmission: 'Park', 'Ride', 'Neutral', 'Drive', 'Low'); the pressure of the air within the springs. The ECU may also receive input signals from push buttons or switches within the vehicle cabin, possibly via an interim control unit.

Air is supplied to the air spring 14 from a source of compressed air such as a pump, either directly or (optionally) from an intermediate reservoir. The compressed air source may be integrated within the air suspension system.

It is necessary to remove moisture from the air supplied to the springs to prevent a build up of liquid in the spring, which could otherwise lead to damage to the valves, pipework or springs caused by ice, should the water freeze. A moisture remover may be integrated within the air suspension unit 10.

Figure 2 is a schematic representation of communication paths for a suspension system on a vehicle. The vehicle has four wheels 111- 114 associated with each of which is an independent air suspension unit 101, 102, 103, 104. Signals (e.g. height sensor signals) from each of the air suspension units 101-104 are passed to each other as shown by the broken lines 120. The transmission of these signals occurs by way of a communications databus linking all of the units 101-104. Signals from other sensors on the vehicle are fed to all the air suspension units via the databus as shown by broken line 122.

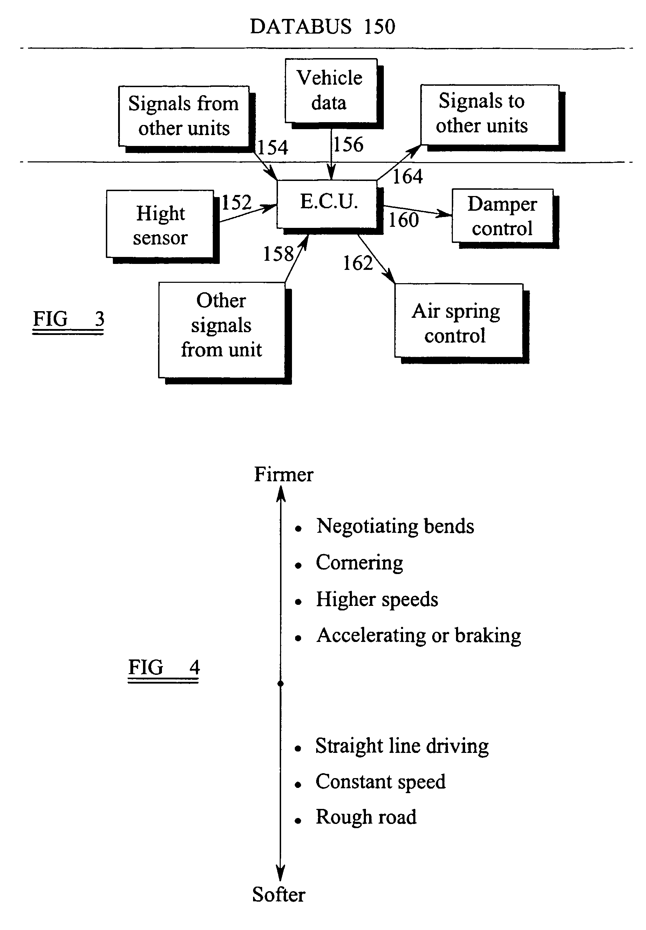

Figure 3 shows the interaction of input and output signals from the ECU 36 (as shown in Figure 1), for one air suspension unit 101 (as shown in Figure 2). Input signals include: the height sensor signal 152 from the unit's own height sensor; signals received via a databus 150 including signals from the other air suspension units on the vehicle 154 (including the height sensor signals) and other data signals 156 from the vehicle; and data signals 158 from any other sensors fitted to the unit 101 (for example relating to the pressure of air in the system). The output signals include: a damper control signal 160 for control of the damping coefficient of the damper; an air spring control signal 162; and an output data signal 164 to the other air suspension units 102-104 via the databus 150.

The basic requirements for a vehicle suspension system are twofold:
(i) Maintenance of contact between the vehicle tyres and the ground over which it is being driven; and
(ii) Comfort of the driver and passengers, through isolation from 'shock' loads and vibration arising from dynamic road inputs.

The suspension arrangement described herein satisfies these requirements through damper control for optimisation of handling and stability characteristics as dynamic conditions change, and air spring control to provide a high level of driver and passenger comfort under all conditions.

Both the dampers and the air springs influence each of the basic requirements. However the control strategy is based on the facts that damper control has significantly the greater effect on (i), while (ii) relies more on the air springs than the dampers in this arrangement.

Vehicle suspensions that feature air springs are by nature 'softly' sprung and have a relatively large degree of freedom of travel. This is necessary if variable ride heights are to be offered, but a corollary is increased roll (see below) for a given degree of lateral acceleration. For the system described, this effect is partly counteracted via damper control.

For damper control, the most important input to each ECU 36 is that from its associated height sensor. Other inputs from the vehicle databus 150 can be used by the ECU 36 for damper control. These include:

Lateral Acceleration: if the vehicle is fitted with a lateral accelerometer that communicates on the databus, the ECUs may read values from this. Lateral acceleration data may be used instead of or in addition to height sensor signals in the control of roll (see below).

Vehicle speed status: informing each ECU 36 whether or not the vehicle is in motion, and if so, whether it is accelerating or decelerating. If the vehicle is in motion then priority is given to damper control, if not then focus is given to control of the air springs. In addition, if the rate of change of speed is calculated, then an acceleration-induced pitch condition may be predicted and the damper 12 set appropriately to counteract it. Alternatively, in the case of vehicles with automatic transmission, a gear selector position signal may be used to inform each ECU 36 whether or not the vehicle is in motion.

Footbrake status: pitch is induced by braking (see below), and if the ECU 36 is informed that the brakes are being applied, then a pitch condition can be predicted and the damper 12 can be set appropriately to oppose it. In addition, if information regarding the rate of application of the brake is available, then the magnitude of the pitch condition can also be predicted.

Steering wheel angle: roll is induced by steering inputs from the driver to a vehicle travelling above manoeuvring speeds (see below). If the ECU 36 is given steering wheel angle information, then the magnitude and direction of a roll condition can be predicted and the damper 12 can be set appropriately to oppose it.

For each suspension unit independently, the ECU 36 selects the damper setting most appropriate to the prevailing vehicle conditions as shown in Figure 4. There may, for example, be four such settings of varying degree of compliance or firmness that could be described as 'soft', 'normal', 'sports' and 'firm'. Having only a given number of discrete settings available simplifies both the physical configuration of the system and the control strategy, and means that a relatively inexpensive microcontroller can be used.

Each setting is manifest in the form of a specific oil path within the damper 12. Each specific oil path has an associated damping coefficient so that changing the path changes the response characteristics of the damper 12. The means for changing the oil path is controlled by a signal from the ECU 36.

The control strategy should take account of differing requirements between the front and rear of the vehicle. Modem vehicle suspension systems are usually configured such that the spring rates are lower and the damping is softer at the front than at the rear. This ensures that there is a predictable understeer characteristic, and so the vehicle 'feels natural' to the driver and passengers when cornering or negotiating bends. For these reasons, in the arrangement of this embodiment, the suspension control units at the front of the vehicle are given higher status on the data bus hierarchy than those at the rear. In addition, the control strategy will give priority to the front of the vehicle. The system takes action to correct errors sensed on the front of the vehicle before those sensed at the rear. For suspension units on the same axle of the vehicle, priority is given to whichever has the largest 'error' - i.e. requires the greatest degree of adjustment.

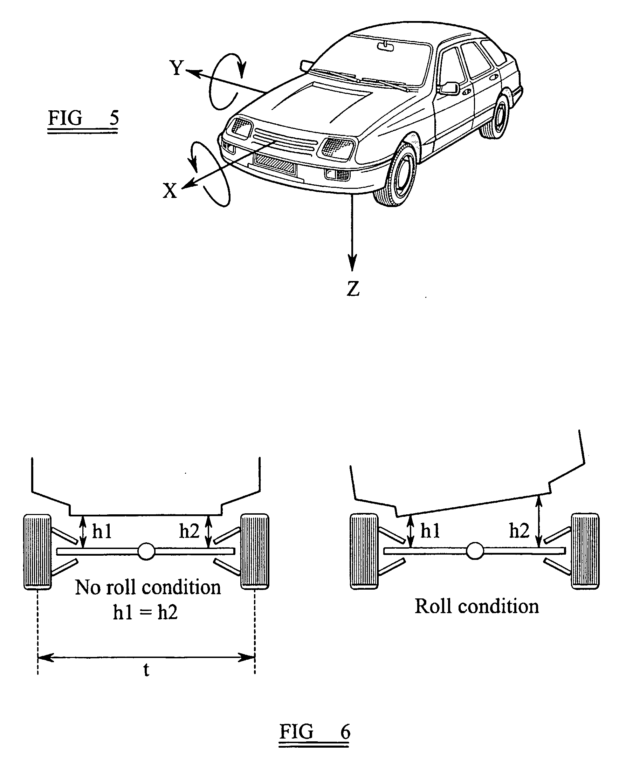

Figure 5 shows the ways in which a suspended vehicle body can move relative to the wheels. Pitch is a relative displacement between the front and rear of a vehicle, this results in a rotation about a transverse axis Y passing through an instantaneous centre that is close to the centre of mass. Roll is a relative displacement between one side of a moving vehicle and the other and results in a rotation about a longitudinal axis X.

Each ECU 36 samples the reading from its associated height sensor at small, predefined intervals (≤ 10ms). In addition, it samples the values from the other height sensors at similar intervals via the communications databus 150. By comparison of height sensor readings, it is possible to detect the occurrence of a pitch or roll condition. Furthermore, because sampling intervals are defined, the rate of progress of the condition can be determined.

A pitch condition is detected by comparison of readings between height sensors on the front and rear axles, i.e. front-right versus rear-right, front-left versus rear-left. Pitch can be induced by changes in speed arising from braking or acceleration. It may also be induced by the loading or unloading of a stationary vehicle, but in such cases the suspension control units would 'know' that the vehicle is stationary from a 'vehicle speed zero' or 'gear selector in Park' signal from the databus 150 and would action the air springs as necessary for re-levelling.

A roll condition is detected by comparison of readings between sensors on the same axle, i.e. rear-right versus rear-left, front-right versus front left. This is depicted in Figure 6. Roll is induced when a vehicle negotiates a bend or is subjected to a strong crosswind.

The 'direction' or 'sign' of the pitch or roll condition can also easily be determined and signifies whether the roll is from left to right or right to left. With reference to Figure 6, for example, if roll is always calculated as h1 - h2 then for the condition shown it would be negative. If h1 is greater than h2 then it would be positive. The roll angle, Θ, can be calculated simply as Θ = (h1 - h2) / t (radians), where t is the centre to centre distance between the wheels (the 'track').

The rate of change of roll angle can also be readily determined, given the sampling intervals of the signals from the height sensors. This is important because it provides an indication of the severity of the condition, and the speed with which the control units must invoke a response from the dampers and with which this response must actually be put into effect.

Given the degree of pitch or roll, the rate of progress and the sign, the ECU 36 is able to determine the most appropriate setting for its associated damper 12. These settings may be stored within a memory in the ECU 36 as a 'look-up table' of discrete values. Once the most appropriate setting is established, the ECU 36 sends a signal to the damper 12 to provide the required damping coefficient by changing the oil path within the damper 12.

In addition to pitch and roll, the system is able to detect and make corrections for linear motion of the sprung mass of the vehicle in the vertical direction (i.e. along a vertical axis Z as shown in Figure 5). This is generally referred-to as 'bounce', and arises from simultaneous displacement of each wheel on a given axle as a result of traversing an obstacle on the road or an undulating road surface.

Bounce is essentially a two-stroke action: bump - upward motion of the tyres relative to the vehicle body, causing compression of the suspension springs and dampers; and rebound - downward motion of the tyres relative to the vehicle body, causing extension of the suspension springs and dampers.

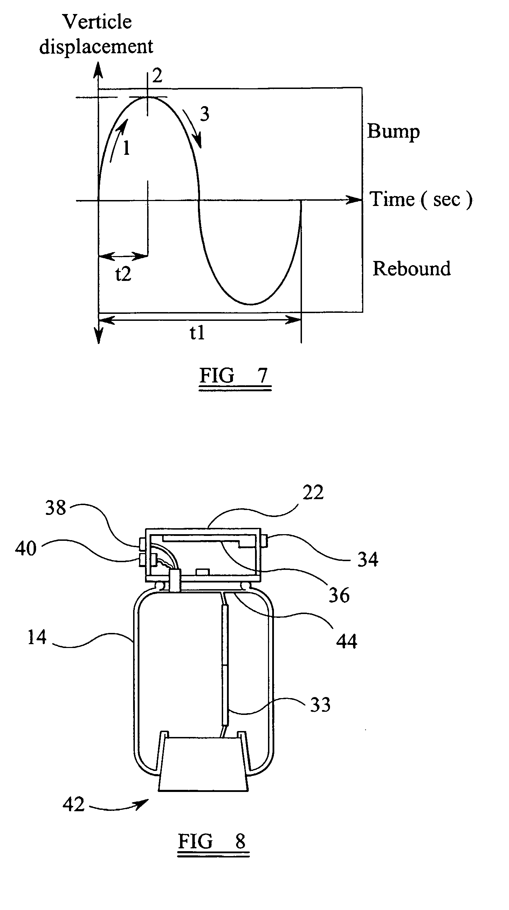

Figure 7 illustrates a vehicle bump-rebound cycle. The time taken for a complete cycle is t1 and the reciprocal of this value is the bounce frequency. If the system is to set dampers in order to oppose a bounce condition, then action must be taken early in the bump-rebound cycle. If the time taken for the bump stroke to reach its peak displacement (t2) is known, and the cycle is assumed to follow the sinusoidal form as shown, then the frequency f of the bump rebound cycle can be calculated from f = 1/t1 = 1/(4 x t2).

In the system described, height readings are sampled at regular time intervals (approx. 10ms) by each ECU. By comparing each reading with the preceding one, the turning point of the bump stroke can be detected and therefore the time t2 calculated given the number of sampling intervals that have elapsed since the onset of the displacement. The bounce frequency can then very quickly be calculated and dampers can be set accordingly.

Every vehicle has natural frequencies of vibration. Of particular concern in the control strategy are bounce frequencies at or close to any of the natural frequencies, fn, in the vertical direction because these would induce undesirable resonance conditions. If the fn values are known, then they can be stored in the memory of each ECU. If a condition is detected with a calculated frequency close to an fn value, then opposing action can be taken.

The air spring 14 (see Figure 1) is controlled by signals from the ECU 36 to control operation of the electrically actuated valve 32 to provide more air to the spring 14, or to relieve air from the spring 14. Signals from the ECU 36 may be used to control activation of a pump or associated air valves forming part of the compressed air supply to the system.

The volume of air in the springs may be varied to control the ride height in the following situations.

Load Levelling: the ECU activates the pump and valves as necessary to maintain a preset ride height - the 'Design Ride Height' - as payload conditions vary.

Extended Ride Height: in response to the driver pushing a button in the vehicle cabin, the springs are inflated in order to raise the vehicle to a level above the Design Ride Height. This increases the clearance between the underside of the vehicle and the ground beneath it, which is desirable when driving over rough or uneven terrain.

High Speed Lowering: at relatively high vehicle speeds, say above 90kph (56mph), it can be advantageous to deflate the springs until the vehicle is lowered to a predetermined level below Design Ride Height. This correspondingly lowers the roll centre and centre of mass (see Figure 5), and consequently stability is improved.

'Kneel' Height (Stationary vehicle only): in response to the driver pushing a button in the vehicle cabin, the springs are deflated until the vehicle is lowered to a prespecified level below the Design Ride Height. This facilitates loading or unloading, and also boarding and alighting of passengers in the case of large vehicles (e.g. vans, trucks, sport utility vehicles).

The essential demands of control of the dampers and control of the air springs are very different, and there will be no conflict between changes in damper coefficient and spring air volume.

The dampers, and their associated controls, must react very quickly (e.g. in around 15ms or less) to changing conditions. This is not so in the case of the air springs, where relatively slow reaction to control inputs is sufficient.

In the event of a malfunction, the system should 'fail safe'. If control of the dampers and/or the air springs is lost, the suspension should be left in such a condition that the vehicle remains stable. If power is lost, for example, the dampers would be left set at 'firm' and air would be 'locked-in' to the springs. In the event of deflation of one or more of the air springs, the associated damper would be set 'soft' to minimise shock or vibrational inputs into the vehicle chassis.

If the system is fitted to a vehicle having antilock braking (ABS), then it could provide assistance to the ABS control strategy. An air suspension maintains the vehicle height within a given band about a preset ride height, often referred-to as the 'design ride height' or 'trim' height, as payload changes. This operation is known as 'load levelling' and is normally only applied to a static vehicle. Deviations from trim height are detected by the height sensors and signalled to the ECU. Where a static vehicle is lowered by the addition of payload, whether passengers or freight, then the displacement will be directly related to the magnitude of the payload. A 'look-up table' of change in height displacement against change in payload could be stored by the ECU. Information regarding payload changes can be provided to the ABS, which can then optimise braking strategy accordingly for minimisation of overall stopping distance. For instance, a greater payload ideally requires application of a greater braking force in a shorter time interval.

Figure 8 illustrates another embodiment of an air suspension unit, being an integrated assembly of air spring 14, valve 32, ECU 36 and height sensor 33. Note that this assembly does not include a damper, and so the annular cavity 30 formed by the rubber envelope of the air spring 14 does not require an airtight seal around the damper (as shown in Figure 1 in the mounting 26). Instead, the height sensor 33 is mounted between a lower mounting 42 and a top plate 44. The lower mounting 42 is mounted directly to an axle of the vehicle.

With this arrangement, the suspension system offers load levelling and (optionally) variable ride height. As there is no damper there is no provision for control of handling and stability (through control of pitch, roll, bounce and yaw), but this arrangement can operate alongside a passive or active damping system, to provide a suspension system suitable for most vehicle applications.

Many of the benefits of this embodiment are the same as those of the embodiment of Figure 1. That is to say, when compared with a 'conventional' (i.e. non-integrated) arrangement: the integrated configuration reduces system complexity, so simplifying packaging on the vehicle; simplified electrical circuitry - the only electrical connections required for each suspension unit are a power supply and ground for each ECU and valve, and a data bus connection to each ECU; struts of identical configuration can be fitted to any axle of the vehicle; each ECU has a programmable microcontroller and so the strut can be adapted to suit a plurality of vehicle platforms; the air suspension unit can be fitted to a suspension system requiring either 2 or 4 controllable elements; ease of manufacture and reduced assembly time, making it especially suitable for mass production; reduced component count, with consequent reduction in the overall cost and weight of the system; reduced bulk presented to the vehicle by the air suspension components, again simplifying packaging and contributing to ease of manufacture - this is particularly true if the system does not have a dedicated source of compressed air, but instead draws a supply from elsewhere on the vehicle (e.g. an engine-driven pump).

Another major advantage of the air suspension units disclosed herein is that the same design can be carried over to suit a multitude of different vehicle platforms. If the ECUs, valves and height sensors are to be placed elsewhere on the vehicle then their location and packaging are dictated by the vehicle design and the geometrical constraints. For two different vehicles, for example, two different configurations of height sensors or valve blocks may well be required, or the ECU enclosure sizes may need to be different. With the arrangements described above, many of the constraints imposed by the vehicle design are removed and the air suspension supplier is free to a much greater extent to determine the type of components used, their source and their packaging. The only constraint is the space envelope provided for mounting the units. The same design would be suitable for most (if not all) vehicle platforms - the only adaptations required would be (i) dimensional to suit the suspension geometry and (ii) to the ECU control software and associated parametric data (eg. required height settings) to suit the suspension requirements of a particular vehicle. Provided that the ECU microcontroller (processor) and read-only memory (ROM) are both programmable, the same ECU can be used for most if not all applications.

Furthermore, environmental legislation makes stringent demands in terms of the electromagnetic compatibility (EMC) performance of vehicle components. The air suspension system as disclosed requires electrical connection (power supply, ground and line to vehicle communications databus, but does not in itself include a wiring harness. The only internal wiring is between the valve and the ECU (unless the valve is connected directly to the printed circuit board of the ECU), and between the height sensor and the ECU. This overall configuration is advantageous in terms of EMC in that it is likely to reduce the degree of both (i) resistance of the system against disturbance from external electromagnetic radiation that may be induced into it by conduction and (ii) electromagnetic radiation emitted by the components of the system itself.

Pneumatic circuitry is also simplified in that the only pipe connection to the system is to the valve to enable supply of air to and exhaust from the air spring. In coventional systems with peripheral valves, pipework is required between the compressed air supply and the valves, and also between the valves and the springs. The system as disclosed therefore reduces the number of pneumatic connections and, as a result, the number of paths presented by the system for air leakage.

## Claims

1. An air suspension unit consisting of an integrated assembly mountable to an axle of a vehicle, the air suspension unit comprising:
an air spring (14);
a height sensor (33) for providing a ride height signal; **characterised in that** the assembly further comprises a valve (32), and
an electronic controller (36);
wherein the electronic controller (36) is operable for controlling the valve (32) to adjust a volume of air in the air spring (14) in response to the ride height signal from the height sensor (33).

2. The air suspension unit of claim 1 wherein the air spring comprises a rubber envelope (14) providing a sealed air volume (30), and the height sensor (33) is mounted within the sealed air volume (30).

3. The air suspension unit of claim 2, wherein the height sensor (33) is a linear transducer.

4. The air suspension unit of any preceding claim, further comprising a fluid damper (12).

5. The air suspension unit of claim 4, wherein a rubber envelope (14) of the air spring surrounds at least part of the fluid damper (12).

6. The air suspension unit of claim 4 or claim 5, further comprising means (16,18) for changing a path for fluid flow within the damper (12), thereby facilitating variation in a damping coefficient of the fluid damper (12).

7. The air suspension unit of claim 6, wherein the means (16,18) for changing the fluid flow path is controllable by the electronic controller (36).

8. The air suspension unit of any preceding claim, wherein the electronic controller (36) includes a programmable microcontroller.

9. A vehicle air suspension system comprising a plurality of suspension elements (101-104), **characterised in that** each suspension element (101-104) includes :
at least one air suspension unit as claimed in any one of the preceding claims; and
at least one fluid damper (12).

10. The vehicle air suspension system of claim 8, wherein each air suspension unit comprises a fluid damper (12) forming part of the integrated unit.

11. The vehicle air suspension system of claim 9 or claim 10, wherein each suspension element (101-104) is associated with one wheel of the vehicle (111-114).

12. The vehicle air suspension system of claim 9 or claim 10, wherein each suspension element is one associated with each of all four wheels of a four-wheel vehicle, or each of the two rear wheels only.

13. The vehicle air suspension system of any one of claims 9 to 12, wherein each suspension element comprises a single air suspension unit.

14. The vehicle air suspension system of any one of claims 9 to 13, wherein the electronic controller (36) of each air suspension unit is responsive to further signals indicative of prevailing conditions of the vehicle.

15. The vehicle air suspension system of claim 14, wherein the further signals are signals from other air suspension units on the vehicle, for example ride height signals from the other height sensors (33).

16. The vehicle air suspension system of claim 14 or claim 15, wherein the further signals also include signals indicative of any or all of: vehicle speed; foot brake position; lateral acceleration; engine (running/not running); gear selector position; pressure of air in the air springs.

17. The vehicle air suspension system of any one of claims 14 to 16, wherein the electronic controller (36) receives input signals from push buttons or switches within the vehicle cabin.

## Patentansprüche

1. Luftfederungseinheit, bestehend aus einer integrierten Baugruppe, die an einer Achse eines Fahrzeugs montierbar ist, wobei die Luftfederungseinheit umfasst:
eine Luftfeder (14);
einen Höhensensor (33) zum Bereitstellen eines Fahrhöhensignals;
**dadurch gekennzeichnet, dass** die Baugruppe des Weiteren umfasst:
ein Ventil (32), und
eine elektronisches Steuereinheit (36),
wobei die elektronische Steuereinheit (36) zur Steuerung des Ventils (32) betätigbar ist um ein Volumen an Luft in der Luftfeder (14) in Reaktion auf das Fahrhöhensignal von dem Höhensensor (33) zu regeln.

2. Luftfederungseinheit nach Anspruch 1, wobei die Luftfeder einen Gummimantel (14) umfasst, der ein abgedichtetes Luftvolumen (30) bereitstellt, und der Höhensensor (33) in dem abgedichteten Luftvolumen (30) angebracht ist.

3. Luftfederungseinheit nach Anspruch 2, wobei der Höhensensor (33) ein linearer Wandler ist.

4. Luftfederungseinheit nach einem der vorhergehenden Ansprüche, des Weiteren mit einem Fluiddämpfer (12).

5. Luftfederungseinheit nach Anspruch 4, wobei ein Gummimantel (14) der Luftfeder wenigstens einen Teil des Fluiddämpfers (12) umgibt.

6. Luftfederungseinheit nach Anspruch 4 oder Anspruch 5, weiterhin umfassend ein Mittel (16, 18) zum Ändern eines Weges für den Fluidfluss in dem Dämpfer (12), wodurch eine Änderung bei einem Dämpfungskoeffizienten des Fluiddämpfers (12) erleichtert wird.

7. Luftfederungseinheit nach Anspruch 6, wobei das Mittel (16, 18) zum Ändern des Fluidflussweges der elektronischen Steuereinheit (36) steuerbar ist.

8. Luftfederungseinheit nach einem der vorhergehenden Ansprüche, wobei die elektronische Steuereinheit (36) einen programmierbaren Mikrokontroller umfasst.

9. Fahrzeugluftfederungssystem umfassend eine Vielzahl von Federungselementen (101-104), **dadurch gekennzeichnet, dass** jedes Federungselement (181-104) umfasst:
wenigstens eine Luftfederungseinheit nach einem der vorhergehenden Ansprüche; und
wenigstens einen Fluiddämpfer (12).

10. Fahrzeugluftfederungssystem nach Anspruch 9, wobei jede Luftfederungseinheit einen Fluiddämpfer (12) umfasst, der einen Teil der integrierten Einheit bildet.

11. Fahrzeugluftfederungssystem nach Anspruch 9 oder Anspruch 10, wobei jedes Federungselement (101-104) mit einem Rad des Fahrzeugs (111-114) in Verbindung steht.

12. Fahrzeugluftfederungssystem nach Anspruch 9 oder Anspruch 10, wobei jedes Federungselement eines ist, das mit jedem der vier Räder eines vierrädrigen Fahrzeugs oder nur mit jedem der beiden Hinterräder in Verbindung steht.

13. Fahrzeungluftfederungssystem nach Anspruch 9 bis 12, wobei jedes Federungselement eine einzelne Luftfederungseinheit umfasst.

14. Fahrzeugluftfederungssystem nach einem der Ansprüche 9 bis 13, wobei die elektronische Steuereinheit (36) jeder Luftfederungseinheit auf weitere Signale reagiert, die Grundbedingungen des Fahrzeugs anzeigen.

15. Fahrzeugluftfederungssystem nach Anspruch 14, wobei die weiteren Signale Signale von anderen Luftfederungseinheiten an dem Fahrzeug sind, zum Beispiel Fahrhöhensignale von den anderen Höhensensoren (33).

16. Fahrzeugluftfederungssystem nach Anspruch 14 oder Anspruch 15, wobei die weiteren Signale auch Signale umfassen, die irgend etwas oder alles aus dem Folgenden anzeigen: Fahrzeuggeschwindigkeit; Fußbremsenposition; Querbeschleunigung; Motor (läuft/läuft nicht); Gangwählschalterstellung; Luftdruck in den Luftfedern.

17. Fahrzeugluftfederungssystem nach einem der Ansprüche 14 bis 16, wobei die elektronische Steuereinheit (36) Eingangssignale von Drucktastern oder Schaltern in der Fahrzeugkabine empfängt.

## Revendications

1. Unité de suspension pneumatique constituée d'un ensemble intégré montable sur un essieu d'un véhicule, l'unité de suspension pneumatique comprenant :
un ressort pneumatique (14) ;
un capteur de hauteur (33) pour fournir un signal de niveau du véhicule ; **caractérisée en ce que** l'ensemble comprend en outre
une soupape (32) ; et
un contrôleur électronique (36) ;
dans laquelle le contrôleur électronique (36) sert à contrôler la soupape (32) afin de régler un volume d'air dans le ressort pneumatique (14) en réponse au signal de niveau du véhicule provenant du capteur de hauteur (33).

2. Unité de suspension pneumatique selon la revendication 1, dans laquelle le ressort pneumatique comprend une enveloppe en caoutchouc (14) fournissant un volume d'air enfermé hermétiquement (30), et le capteur de hauteur (33) est monté à l'intérieur du volume d'air enfermé hermétiquement (30).

3. Unité de suspension pneumatique selon la revendication 2, dans laquelle le capteur de hauteur (33) est un transducteur linéaire.

4. Unité de suspension pneumatique selon l'une quelconque des revendications précédentes, comprenant en outre un amortisseur à fluide (12).

5. Unité de suspension pneumatique selon la revendication 4, dans laquelle une enveloppe en caoutchouc (14) du ressort pneumatique entoure au moins une partie de l'amortisseur à fluide (12).

6. Unité de suspension pneumatique selon la revendication 4 ou la revendication 5, comprenant en outre un moyen (16, 18) servant à changer de voie pour l'écoulement de fluide à l'intérieur de l'amortisseur (12), entraînant ainsi une variation dans un coefficient d'amortissement de l'amortisseur à fluide (12).

7. Unité de suspension pneumatique selon la revendication 6, dans laquelle le moyen (16, 18) servant à changer la voie d'écoulement de fluide est contrôlable par le contrôleur électronique (36).

8. Unité de suspension pneumatique selon l'une quelconque des revendications précédentes, dans laquelle le contrôleur électronique (36) comprend un microcontrôleur programmable.

9. Système de suspension pneumatique de véhicule comprenant une pluralité d'éléments de suspension (101-104), **caractérisé en ce que** chaque élément de suspension (101-104) comprend :
au moins une unité de suspension pneumatique selon l'une quelconque des revendications précédentes ; et
au moins un amortisseur à fluide (12).

10. Système de suspension pneumatique de véhicule selon la revendication 9, dans lequel chaque unité de suspension pneumatique comprend un amortisseur à fluide (12) faisant partie de l'unité intégrée.

11. Système de suspension pneumatique de véhicule selon la revendication 9 ou la revendication 10, dans lequel chaque élément de suspension (101-104) est associé à une roue du véhicule (111-114).

12. Système de suspension pneumatique de véhicule selon la revendication 9 ou la revendication 10, dans lequel chaque élément de suspension est un élément associé à chacune des quatre roues d'un véhicule à quatre roues, ou à chacune des deux roues arrière uniquement.

13. Système de suspension pneumatique de véhicule selon l'une quelconque des revendications 9 à 12, dans lequel chaque élément de suspension comprend une seule unité de suspension pneumatique.

14. Système de suspension pneumatique de véhicule selon l'une quelconque des revendications 9 à 13, dans lequel le contrôleur électronique (36) de chaque unité de suspension pneumatique réagit à d'autres signaux indiquant les conditions prédominantes du véhicule.

15. Système de suspension pneumatique de véhicule selon la revendication 14, dans lequel les autres signaux sont des signaux provenant d'autres unités de suspension pneumatique sur le véhicule, par exemple des signaux de niveau du véhicule provenant des autres capteurs de hauteur (33).

16. Système de suspension pneumatique de véhicule selon la revendication 14 ou la revendication 15, dans lequel les autres signaux comprennent également des signaux indiquant l'un quelconque ou la totalité des paramètres suivants : vitesse du véhicule ; position du frein à pied ; accélération latérale ; moteur (s'il tourne/s'il ne tourne pas) ; position du sélecteur de vitesse ; pression d'air dans les ressorts pneumatiques.

17. Système de suspension pneumatique de véhicule selon l'une quelconque des revendications 14 à 16, dans lequel le contrôleur électronique (36) reçoit des signaux d'entrée depuis des boutons-poussoirs ou des interrupteurs situés à l'intérieur de l'habitacle du véhicule.
